**Europäisches Patentamt**

**European Patent Office**

**Office européen des brevets**

(19)

(11) Numéro de publication: **0 099 307**
**B1**

(12) **FASCICULE DE BREVET EUROPEEN**

(45) Date de publication du fascicule du brevet:
**29.01.86**

(21) Numéro de dépôt: **83420090.9**

(22) Date de dépôt: **31.05.83**

(51) Int. Cl.⁴: **B 21 D 26/02**

(54) Procédé et dispositif de formage local en expansion de précision pour tubes métalliques de grande longueur.

(30) Priorité: **12.07.82 US 397217**

(43) Date de publication de la demande:
**25.01.84 Bulletin 84/4**

(45) Mention de la délivrance du brevet:
**29.01.86 Bulletin 86/5**

(84) Etats contractants désignés:
**DE FR GB IT SE**

(56) Documents cités:
**CH - A - 436 187**
**DE - A - 2 131 811**
**DE - A - 2 935 086**
**FR - A - 1 312 726**
**GB - A - 2 042 955**
**US - A - 3 625 040**

**Patent abstracts of Japan vol. 4, no. 120, 26 aout 1980 page 111M28**

(73) Titulaire: **CEZUS Compagnie Européenne du Zirconium, 10. rue Général Foy, F-75008 Paris (FR)**

(72) Inventeur: **Galle, Serge, 18 avenue des Poiriers, F-49460 Montreuil-Juigne (FR)**
Inventeur: **Hautdidier, Jérôme, 7 Avenue du Commandant Ménard, F-49240 Avrille (FR)**
Inventeur: **Soulet, Christian, Chemin des-Lilas Les Charmettes, F-73400 Ugine (FR)**

(74) Mandataire: **Séraphin, Léon et al, PECHINEY 28, rue de Bonnel, F-69433 Lyon Cedex 3 (FR)**

## Description

Le procédé suivant l'invention concerne le formage de la paroi de tubes métalliques de plusieurs mètres de longueur, dans des zones localisées avec précision, à distance des extrémités.

Ce procédé concerne plus particulièrement le formage en expansion, dans des zones localisées, de tubes métalliques à parois minces, tels que ceux utilisés pour le guidage des barres de contrôle ou d'arrêt des réacteurs nucléaires. Pour certaines utilisations, ces tubes doivent comporter une ou plusieurs zones de diamètre accru, de relativement faible longueur, situées à une distance relativement grande et déterminée avec beaucoup de précision de l'une ou l'autre des extrémités.

On connaît déjà des méthodes permettant de former une zone en expansion dans un tube métallique. Ainsi, le document GB-A N° 2042955 décrit un procédé de formage d'un corps creux préformé par expansion locale dans une chambre d'expansion de forme définie par une matrice tubulaire extérieure. Des moyens de butée ou d'arrêt enferment le tube et fixent la position de la matrice par rapport à lui. Le dispositif comporte un mandrin logé à l'intérieur du tube, ledit mandrin étant pourvu d'un conduit intérieur permettant d'introduire un fluide sous pression à l'intérieur de la paroi du corps creux. Le dispositif comporte également des joints d'étanchéité délimitant avec le mandrin et la paroi du tube l'espace annulaire dans lequel le fluide sous pression est introduit, au droit de la chambre d'expansion. Ces joints sont contenus dans des gorges annulaires du mandrin ayant de préférence un fond incliné par rapport à l'axe, de telle sorte que la pression du fluide provoque l'écartement des deux joints et une amélioration de l'étanchéité.

Par sa conception, le dispositif décrit dans GB-A N° 2042955 est adapté à l'expansion locale de tubes métalliques, dans lesquels la distance de la zone expansée à une extrémité du tube peut varier d'un tube à l'autre par suite du raccourcissement du tube causé par son expansion locale.

Ce dispositif et ce procédé ne sont donc pas applicables tels quels au problème déjà exposé dans lequel on veut déformer en expansion une zone limitée d'un tube métallique à parois minces, cette zone expansée pouvant se trouver à une distance quelconque des extrémités de ce tube et ayant une position extrêmement reproductible par rapport à une extrémité déterminée du tube. De façon typique, la distance entre cette extrémité du tube et l'extrémité de la zone expansée la plus proche doit alors être reproductible d'un tube à l'autre avec un écart moyen inférieur à $\pm$ 0,2% de la distance nominale.

Le dispositif suivant l'invention permet d'obtenir les résultats recherchés. Comme il est connu, il comporte une matrice tubulaire démontable ouverte aux deux extrémités et comprenant une chambre d'expansion, dont les dimensions intérieures correspondent à celles de la zone expansée à réaliser, et de part et d'autre de ladite chambre d'expansion deux portées cylindriques dont le diamètre intérieur est sensiblement égal au diamètre extérieur initial du tube à expanser majoré du jeu nécessaire pour l'engagement du tube, et il comporte d'autre part un mandrin logé à l'intérieur du tube dans la partie de ce tube qui se trouve à l'intérieur de la matrice, ledit mandrin étant pourvu d'un conduit intérieur permettant d'introduire un fluide sous pression dans l'espace annulaire compris entre le mandrin et le tube, ledit espace annulaire étant délimité par des joints d'étanchéité contenus dans deux gorges annulaires et disposés entre le mandrin et le tube de part et d'autre de la chambre d'expansion au niveau des portées cylindriques de la matrice.

Suivant l'invention, les deux portées cylindriques de la matrice ont des coefficients de frottement différents vis-à-vis de la surface du tube à expanser, et la portée cylindrique ayant le coefficient de frottement le plus élevé est située du côté de l'extrémité du tube dont on veut maintenir constante la distance à la matrice pendant qu'on effectue l'expansion.

On obtient ainsi le résultat recherché, c'est-à-dire une distance reproductible de la zone expansée du tube à l'une de ses extrémités, en bloquant le glissement du tube par rapport à la matrice et au mandrin au niveau de la portée de la matrice située du côté de l'extrémité de référence du tube, tandis que le glissement du tube au niveau de l'autre portée est favorisé.

De préférence, chaque zone d'étanchéité comporte une gorge annulaire réalisée autour du mandrin, qui contient au moins un joint torique, en élastomère par exemple.

Chaque gorge est de préférence plus large que profonde et de profondeur variable, avec une zone de profondeur maximale du côté de l'espace annulaire qu'elle délimite, zone dans laquelle est logé, au repos, au moins un joint torique, et une zone de profondeur décroissante qui rejoint le bord opposé de la gorge. Cette disposition de la gorge est connue en elle-même par GB-A N° 2042955.

L'invention concerne aussi le procédé de formage en expansion correspondant dans lequel, comme il est connu, on dispose autour du tube, dans la zone à former, une matrice comportant une chambre d'expansion comprise entre deux portées cylindriques, et dans lequel on introduit à l'intérieur du tube, dans la partie de celui-ci qui se trouve à l'intérieur de la matrice, un mandrin à travers lequel on introduit un fluide sous pression dans l'espace annulaire compris entre le mandrin et le tube, cet espace étant délimité par des joints d'étanchéité disposés dans deux gorges annulaires de part et d'autre de la chambre d'expansion au niveau des portées cylindriques de la matrice, et dans lequel on élève la pression du fluide jusqu'à ce que le tube se déforme et vienne s'appliquer sur les parois de la chambre d'expansion.

De façon particulière à l'invention, les deux portées cylindriques ont des coefficients de frottement différents vis-à-vis du tube, et on oriente la matrice par rapport au tube à expanser de façon que la portée ayant le coefficient de frottement le plus élevé se trouve du côté de l'extrémité du tube dont on veut maintenir constante la distance par rapport à la matrice pendant le formage en expansion.

Suivant une caractéristique complémentaire du procédé suivant l'invention, on ajuste, avant expansion, la distance $L_1$ entre la face d'extrémité de la matrice, qui se trouve du côté de la portée dont le coefficient de frottement est le plus élevé, et l'extrémité correspondante du tube, de façon que, compte tenu de la distance $L_2$ entre la face d'extrémité de la matrice et l'origine de la zone de raccordement à la chambre d'expansion, on ait la relation :

$$L = L_1 + L_2$$

L étant, après expansion, la distance entre l'extrémité du tube et le point d'origine de la zone expansée.

L'exemple non limitatif et les figures ci-après permettront de mieux comprendre les caractéristiques du dispositif suivant l'invention, ainsi que le procédé de formage en expansion qui met en œuvre ce dispositif.

La fig. 1 est une vue en coupe longitudinale d'un mode de réalisation du dispositif suivant l'invention.

La fig. 2 est une coupe suivant A de la fig. 1.

La fig. 3 est une vue en coupe d'un tronçon d'un tube de grande longueur après formage en expansion, au moyen du dispositif suivant l'invention.

La fig. 4 représente un mode particulier de réalisation de la matrice suivant l'invention.

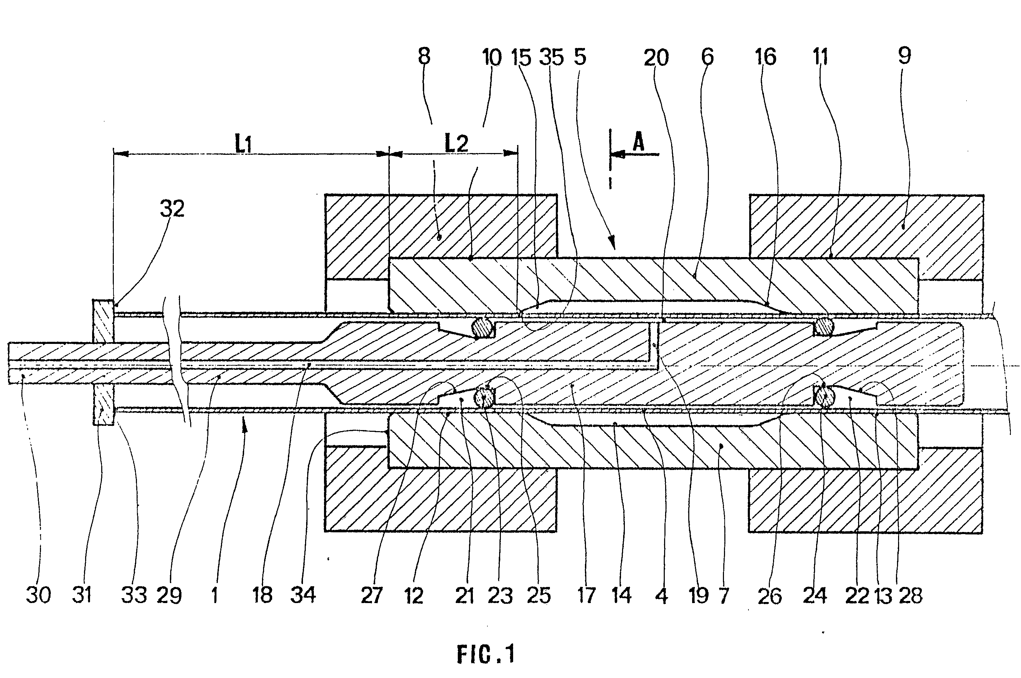

La fig. 1 représente un dispositif suivant l'invention, utilisé pour la réalisation par expansion d'une zone localisée de diamètre accru dans une partie courante d'un tube métallique à paroi mince de grande longueur, la distance entre l'une des extrémités du tube et l'extrémité la plus proche de l'origine de la zone de diamètre accru devant être égale à ± 0,2% près à une longueur L fixée à l'avance.

La fig. 1 montre un tube 1 en alliage à base de zirconium du type zircaloy 2 conforme à la norme ASTM B 353-71 de 10 mm de diamètre intérieur, 0,5 mm d'épaisseur et environ 4 m de long.

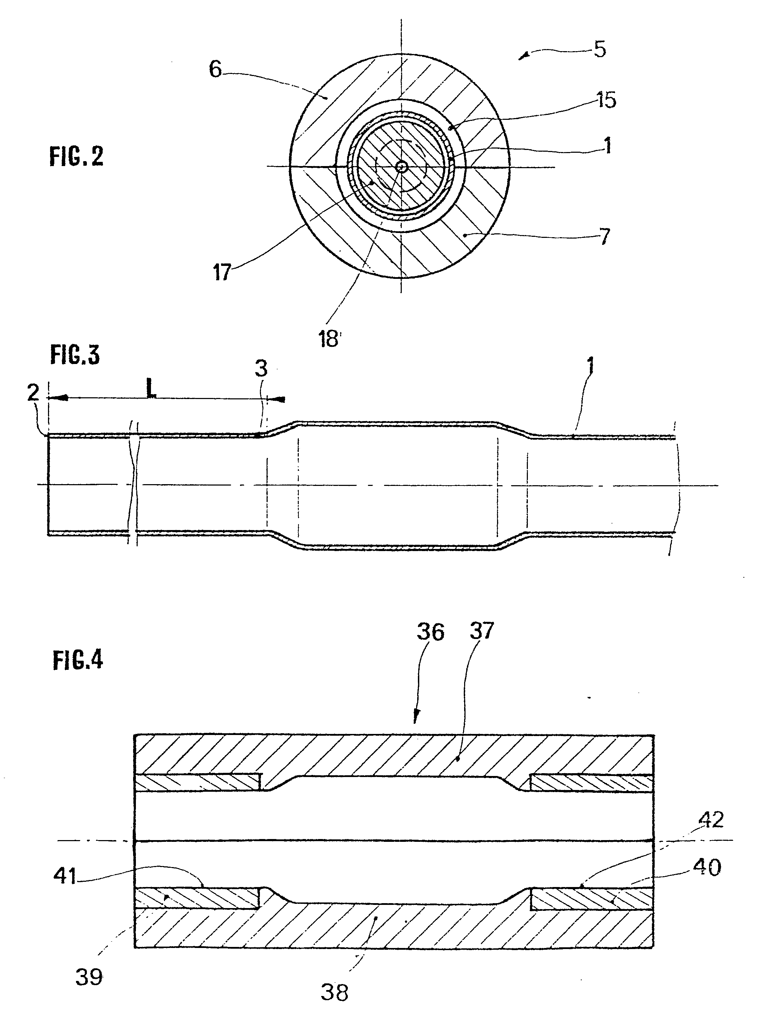

On se propose d'accroître le diamètre intérieur de ce tube en le portant à 12 mm sur une longueur de 50 mm. On se propose aussi d'effectuer cette expansion de façon que la longueur L de la partie non déformée du tube, qui s'étend entre son extrémité 2 et l'origine de la zone expansée 3 (fig. 3), soit égale à 500 mm avec une précision de ± 1 mm. Pour atteindre ce résultat, on introduit la zone 4 (fig. 1) du tube à expanser à l'intérieur d'une matrice 5 de symétrie axiale, démontable en deux parties 6 et 7 qui sont maintenues en place au moyen de deux bagues d'assemblage annulaire 8 et 9. Chacune de ces bagues comporte un logement cylindrique 10, 11 à l'intérieur duquel s'engage une extrémité de la matrice avec le minimum de jeu nécessaire pour le montage et le démontage.

La matrice comporte, à chacune de ses extrémités, une portée cylindrique 12, 13, dont le diamètre est égal au diamètre extérieur du tube 1, c'est-à-dire 11 mm, majoré du minimum de jeu nécessaire pour permettre l'engagement de ce tube, et une chambre d'expansion 14 cylindrique dans le cas du présent exemple, de 13 mm de diamètre intérieur et de 50 mm de long. Des congés 15 et 16 raccordent les zones de diamètres différents.

A l'intérieur du tube 1, on introduit un mandrin cylindrique en acier 17 de 9,8 mm de diamètre extérieur, à parois épaisses, qui comporte un conduit intérieur 18. Un perçage radial 9 met en communication le conduit 18 avec l'espace annulaire 20 compris entre le mandrin et le tube 1.

De part et d'autre de cet espace annulaire 20, deux gorges annulaires 21 et 22 sont réalisées autour du mandrin. Comme le montre la fig. 1, ces gorges, dans chacune desquelles on loge au moins un joint torique 23 ou 24, ont une profondeur variable et une longueur bien supérieure à leur profondeur maximale. Elles comportent chacune une zone de profondeur maximale 25, 26, du côté de l'espace annulaire 20, dans laquelle vient se loger au repos le joint torique. Cette profondeur est déterminée de façon à être légèrement inférieure au diamètre du joint. Dans le cas présent, on utilise, par exemple, des joints ayant un diamètre de tore de 2 mm et la profondeur maximale de la gorge est de 1,8 mm. Le fond de chacune des gorges présente une deuxième zone 27, 28, de forme sensiblement conique, dont la profondeur va en décroissant en s'éloignant de l'espace annulaire 20.

La pente de la génératrice de cette partie conique est, par exemple, de 30° par rapport à l'axe du mandrin. La largeur totale de la gorge est d'environ trois fois le diamètre du joint torique. Le mandrin 17 est prolongé par un tube de liaison 29, également cylindrique, en acier, de diamètre plus faible que celui du mandrin. Ce tube peut être raccordé par son extrémité 30 à un moyen d'introduction de fluide non représenté. Une bague 31 est vissée à l'extrémité de ce tube de liaison. On voit que les dimensions du mandrin sont déterminées de façon que, lorsqu'il est introduit à l'intérieur du tube à expanser 1 et que l'ensemble est placé à l'intérieur de la matrice 5, les joints toriques 23 et 24, ainsi que les gorges 21 et 22 qui les contiennent, se trouvent en regard des portées cylindriques d'entrée 12 et 13 de la matrice, de part et d'autre de la paroi 14 de la zone d'expansion.

On voit que, grâce à la bague 31 dont on peut facilement ajuster l'emplacement sur le tube 29, on peut amener en butée contre la face 32 de cette bague, l'extrémité 33 du tube 1 et ajuster ensuite la distance $L_1$ entre cette extrémité 33 et la face d'extrémité 34 de la matrice 5. En tenant compte de la distance $L_2$ entre la face d'extrémité 34 de la matrice et l'origine 35 de la zone de raccordement 15, on ajuste $L_1$ de façon à obtenir la relation :

$$L = L_1 + L_2$$

Dans le cas de l'exemple, L = 500 mm.

Enfin, l'opération d'expansion est effectuée en introduisant à partir de l'extrémité 30 du tube 29 reliée à un moyen d'introduction de fluide sous pression, un fluide de préférence liquide, tel que par exemple de l'eau ou de l'huile, qui parcourt le conduit 18, sort de ce conduit par le perçage radial 19 et vient donc exercer sa pression sur les parois intérieures du tube 1 dans l'espace annulaire 20.

En augmentant progressivement la pression du fluide, on constate tout d'abord que les joints toriques 23 et 24 sont repoussés peu à peu en direction des bords extérieurs des gorges 21 et 22. Ce déplacement, vers des zones dans lesquelles la profondeur de la gorge diminue, entraîne un serrage accru des joints toriques et permet donc de conserver une excellente étanchéité, même lorsque la pression du fluide atteint des valeurs de l'ordre de 1000 bars. La pression du fluide est accrue jusqu'à ce que les forces qu'il exerce sur les parois intérieures du tube dépassent la limite élastique de celui-ci et qu'il vienne se plaquer sur les parties 14 de la matrice. Dans le cas du présent exemple, la pression mise en jeu est de l'ordre de 800 bars.

Cette expansion s'accompagne d'un glissement des parties cylindriques du tube qui sont au voisinage de la zone d'expansion et on constate que, après expansion, l'extrémité 33 du tube 1 n'est plus en appui sur la face 32 de la bague 31 et s'est rétractée de plusieurs millimètres. Des essais répétés ont montré que ce glissement n'est pas reproductible d'une fois à l'autre.

Pour accroître la précision de la détermination de la valeur de L, ce qui est nécessaire pour les applications concernant les réacteurs nucléaires, on procède au blocage du glissement du tube suivant le sens axial par rapport à la matrice et au mandrin, au niveau de l'une des deux portées de la matrice, tandis que l'on favorise, au contraire, le glissement du tube au niveau de l'autre portée, en prévoyant des coefficients de frottement différents vis-à-vis du tube.

Si, dans le cas de la fig. 1, on est en mesure d'empêcher le glissement du tube 1 au niveau de la portée 12 tandis que l'on permet son glissement facile au niveau de la portée 13, on comprend que, après avoir réglé la valeur de $L_1$ de la façon indiquée plus haut, il ne se produit plus de raccourcissement de la partie du tube comprise entre la face d'extrémité 34 de la matrice et la portée 32 de la bague 31 au cours du processus d'expansion. Ce processus achevé, l'extrémité 33 du tube 1 demeure au contact de la portée 32, et la longueur L = 500 mm n'a pas varié. Par contre, on observe bien sûr, de l'autre côté du mandrin, un raccourcissement important du tube. Mais ce raccourcissement se produit de façon reproductible dans la mesure où les caractéristiques dimensionnelles ainsi que les propriétés mécaniques sont reproductibles d'un tube à l'autre. Il est donc possible, en bloquant le glissement du tube sur l'une des portées de la matrice, d'effectuer l'expansion du tube sans observer de variation sensible de la distance entre l'extrémité du tube qui se trouve du côté de cette portée de la matrice. Grâce à ce blocage, il est également possible, si on procède à l'expansion de tubes ayant des caractéristiques physiques et dimensionnelles très proches, de constater que la distance entre l'autre extrémité du tube et la matrice est réduite au cours de l'expansion de façon extrêmement reproductible, et peut donc être calculée à l'avance.

Dans la pratique, on dispose d'assez nombreux moyens pour empêcher le glissement du tube 1 au niveau d'une des portées et pour favoriser ce glissement au niveau de l'autre. On peut, en particulier, pour faire obstacle à ce glissement au niveau d'une des deux portées de la matrice, augmenter le serrage du joint torique correspondant: diamètre de tore accru ou encore profondeur de gorge réduite. On peut aussi, et cela est le plus souvent retenu, modifier le coefficient de frottement de l'une des portées par rapport à l'autre. Pour cela, on peut effectuer des traitements de surface convenables sur chacune des deux portées 12 et 13.

Une méthode particulièrement efficace, comme le montre la fig. 4, consiste à loger dans au moins une de ces portées un insert en un matériau convenable. On voit, fig. 4, une matrice 36 en deux parties 37 et 38 de conception semblable à celle de la matrice 5 représentée aux fig. 1 et 2. Cette matrice comporte deux inserts annulaires 39 et 40, également en deux parties, disposés dans les zones d'entrée de la matrice.

L'insert 39 est réalisé en un matériau possédant un mauvais coefficient de frottement vis-à-vis du métal du même tube. On peut utiliser en particulier pour réaliser cet insert 39 un acier traité dont la surface 41 en contact avec le tube ne sera pas lubrifiée. Dans certains cas, l'acier dont est constituée la matrice peut être utilisé comme portée sans faire appel à un insert.

Pour l'insert 40, on peut utiliser un carbure tel que le carbure de tungstène ou un bronze ou un autre matériau à faible coefficient de frottement. De plus, on peut, si cela est utile, lubrifier légèrement la surface 42 de l'insert 40, ou encore effectuer un traitement de surface approprié.

La mise en place de ces inserts, leur solidarisation avec le métal de la matrice et leur usinage avec la précision désirée peuvent être réalisés par toutes méthodes convenables bien connues de l'homme de l'art.

Dans le cas du présent exemple, l'insert 39 a été réalisé en acier et l'insert 40 en carbure de tungstène.

En utilisant une matrice ainsi réalisée, montée de la façon décrite précédemment et représentée à la fig. 1, on a constaté que, au cours de l'expansion, le tube 1 était maintenu par la pression interne en appui sur la surface cylindrique 41 de l'insert 39 sans aucun glissement. Au contraire, au niveau de la surface cylindrique 42 de l'insert 40, on observait un glissement de plusieurs millimètres du tube le long de l'axe vers l'intérieur de la matrice au moment de l'expansion. La longueur L du tube qui avait été ajustée à 500 mm avant expansion n'avait pas varié après expansion.

Dans certains cas, comme cela a été indiqué plus haut, on peut se dispenser de mettre en place des inserts et se contenter d'effectuer, au niveau des zones d'entrée de la matrice, un traitement de surface différent. Il suffit, en fait, d'obtenir une différence significative du coefficient de frottement de l'une des portées par rapport à l'autre.

D'autres modes de réalisation du dispositif suivant l'invention peuvent être envisagés qui font également l'objet de l'invention.

Il est possible, en particulier, de réaliser une matrice ne présentant pas de plan de joint axial, mais dont au moins l'une des deux zones d'entrée est démontable de façon à permettre l'extraction du tube après expansion.

On peut aussi, dans certains cas, envisager de loger dans chacune des gorges 21 et 22 deux joints toriques côte à côte. Il est alors nécessaire d'élargir la zone de profondeur maximale 25, 26 de chaque gorge, pour permettre cette mise en place.

Le dispositif et le procédé de formage en expansion qui viennent d'être décrits peuvent être utilisés pour le formage de tubes métalliques de toute sorte.

Ils sont utilisés de façon particulièrement avantageuse pour le formage de tubes en alliages de zirconium pour les applications nucléaires, tels que les tubes en zircaloy 2 ou 4. Ils s'appliquent aussi au formage de tubes en titane allié ou non allié, aciers spéciaux, inoxydables, ou réfractaires ou en tous autres métaux ou alliages.

## Revendications

1. Dispositif pour formage local en expansion d'une zone localisée avec précision dans une partie courante de la paroi d'un tube cylindrique de grande longueur; comportant d'une part une matrice tubulaire démontable (5) ouverte aux deux extrémités comprenant une chambre d'expansion (14), dont les dimensions intérieures correspondent à celles de la zone expansée à réaliser, et de part et d'autre de ladite chambre d'expansion deux portées cylindriques (12, 13) dont le diamètre intérieur est sensiblement égal au diamètre extérieur initial du tube à expanser (1) majoré du jeu nécessaire pour l'engagement du tube (1), et comportant d'autre part un mandrin (17) logé à l'intérieur du tube (1) dans la partie de ce tube (1) qui se trouve à l'intérieur de la matrice (5), ledit mandrin (17) étant pourvu d'un conduit intérieur (18) permettant d'introduire un fluide sous pression dans l'espace annulaire (20) compris entre le mandrin (17) et le tube (1), ledit espace annulaire (20) étant délimité par des joints d'étanchéité (23, 24) contenus dans deux gorges annulaires (21, 22) et disposés entre le mandrin (17) et le tube (1) de part et d'autre de la chambre d'expansion (14) au niveau des portées cylindriques (12, 13) de la matrice (5), caractérisé en ce que les deux portées cylindriques (12, 13) de la matrice (5) ont des coefficients de frottement différents vis-à-vis de la surface du tube à expanser (1), et en ce que la portée cylindrique (12) ayant le coefficient de frottement le plus élevé est située du côté de l'extrémité (33) du tube (1) dont on veut maintenir constante la distance à la matrice (5) pendant qu'on effectue l'expansion.

2. Dispositif suivant la revendication 1, caractérisé en ce que chacune des gorges annulaires (21) contient au moins un joint torique (23).

3. Dispositif suivant l'une quelconque des revendications 1 ou 2, caractérisé en ce qu'au moins l'une des deux portées (12) de la matrice est constituée par un insert (39) réalisé en un matériau présentant un coefficient de frottement vis-à-vis de la surface du tube (1) différent de celui du matériau de l'autre portée (13).

4. Procédé de formage en expansion d'au moins une zone localisée avec précision dans une partie courante de la paroi d'un tube cylindrique de grande longueur, la distance entre la zone expansée et l'une des extrémités du tube devant être ajustée avec précision, dans lequel on dispose autour du tube (1), dans la zone à former, une matrice (5) comportant une chambre d'expansion (14) comprise entre deux portées cylindriques (12, 13), et dans lequel on introduit à l'intérieur du tube (1), dans la partie de celui-ci qui se trouve à l'intérieur de la matrice (5), un mandrin (17) à travers lequel on introduit un fluide sous pression dans l'espace annulaire (20) compris entre le mandrin (17) et le tube (1), cet espace étant délimité par des joints d'étanchéité (23, 24) disposés dans deux gorges annulaires de part et d'autre de la chambre d'expansion (14) au niveau des portées cylindriques (12, 13) de la matrice (5), et dans lequel on élève la pression du fluide jusqu'à ce que le tube (1) se déforme et vienne s'appliquer sur les parois de la chambre d'expansion (14), caractérisé en ce que les deux portées cylindriques (12, 13) ont des coefficients de frottement différents vis-à-vis du tube, et dans lequel on oriente la matrice (5) par rapport au tube à expanser (1) de façon que la portée (12) ayant le coefficient de frottement le plus élevé se trouve du côté de l'extrémité (33) du tube (1) dont on veut maintenir constante la distance par rapport à la matrice (5) pendant le formage en expansion.

5. Procédé suivant la revendication 4, caractérisé en ce que l'on ajuste, avant expansion, la distance $L_1$ entre la face d'extrémité (34) de la matrice (5) et l'extrémité (33) du tube (1), de façon que, compte tenu de la distance $L_2$ entre la face d'extrémité (34) de la matrice (5) et l'origine (35) de la zone de raccordement (15) à la chambre d'expansion (14), on ait la relation:

$$L = L_1 + L_2$$

L étant la distance entre l'extrémité (33) du tube (1) et l'origine (3) de la zone expansée, distance qu'on veut maintenir constante pendant qu'on effectue l'expansion.

## Claims

1. Apparatus for local expansion shaping of a region which is precisely located in a longitudinal portion of the wall of a cylindrical tube of substantial length, comprising on the one hand a dismantleable tubular die (5) which is open at the two ends, comprising an expansion chamber (14) whose inside dimensions correspond to those of the expanded region to be produced, and on respective sides of said expansion chamber, two cylindrical bearing surfaces (12, 13) of which the inside diameter is substantially equal to the initial outside diameter of the tube (1) to be expanded, plus the clearance required for engagement of the tube (1), and comprising on the other hand a mandrel (17) which is housed within the tube (1) in the portion of said tube (1) which is within the die (5), said mandrel (17) being provided with an internal conduit (18) for the introduction of a pressurised fluid into the annular space (20) between the mandrel (17) and the tube (1), said annular space (20) being delimited by sealing means (23, 24) contained in two annular grooves (21, 22) and disposed between the mandrel (17) and the tube (1) on respective sides of the expansion chamber (14) at the location of the cylindrical bearing surfaces (12, 13) of the die (5), characterised in that the two cylindrical bearing surfaces (12, 13) of the die (5) have different coefficients of friction with respect to the surface of the tube (1) to be expanded, and that the cylindrical bearing surface (12) having the higher coefficient of friction is disposed on the side towards the end (33) of the tube (1), whose spacing from the die (5) is to be maintained constant while expansion is effected.

2. Apparatus according to Claim 1, characterised in that each of the annular grooves (21) contains at least one toric seal (23).

3. Apparatus according to either one of Claims 1 or 2, characterised in that at least one of the two bearing surfaces (12) of the die is formed by an insert (39) made of a material having a coefficient of friction with respect to the surface of the tube (1) which is different from that of the material of the other bearing surface (13).

4. A process for expansion shaping of at least one region which is precisely located in a longitudinal portion of the wall of a cylindrical tube of substantial length, the distance between the expanded region and one of the ends of the tube having to be precisely adjusted, wherein a die (5) comprising an expansion chamber (14) between two cylindrical bearing surfaces (12, 13) is disposed around the tube (1) in the region to be shaped, and wherein a mandrel (17) is introduced into the interior of the tube (1) in the portion thereof which is disposed within the die (5), by way of which mandrel a pressurised fluid is introduced into the annular space (20) between the mandrel (17) and the tube (1), said space being delimited by sealing means (23, 24) disposed in two annular grooves on respective sides of the expansion chamber (14) at the location of the cylindrical bearing surfaces (12, 13) of the die (5), and wherein the pressure of the fluid is increased until the tube (1) is deformed and comes to bear against the walls of the expansion chamber (14), characterised in that the two cylindrical bearing surfaces (12, 13) have different coefficients of friction with respect to the tube and in that the die (5) is so oriented with respect to the tube (1) to be expanded that the bearing surface (12) having the higher coefficient of friction is disposed on the side towards the end (33) of the tube whose spacing with respect to the die (5) is to be maintained constant during the expansion shaping operation.

5. A process according to Claim 4, characterised in that, before expansion, the distance $L_1$ between the end face (34) of the die (5) and the end (33) of the tube (1) is adjusted such that, taking account of the distance $L_2$ between the end face (34) of the die (5) and the origin (35) of the connecting region (15) connecting to the expansion chamber (14), the following relationship applies:

$$L = L_1 + L_2$$

L being the distance between the end (33) of the tube (1) and the origin (3) of the expanded region, which distance is to be maintained constant while expansion is effected.

## Patentansprüche

1. Vorrichtung zur örtlichen Aufweitung eines präzise lokalisierten Bereichs im Verlauf der Wandung zylindrischer Rohre grosser Länge mit einerseits einer abnehmbaren Rohrform (5), die an beiden Enden offen ist und einer Expansionskammer (14), deren Innenabmessungen denen des aufzuweitenden Bereichs entspricht, und zu beiden Seiten der Expansionskammer zwei zylindrische Formsitze (12, 13) aufweist, deren Innendurchmesser ungefähr gleich dem ursprünglichen Aussendurchmesser des aufzuweitenden Rohres (1) zuzüglich des zur Einführung des Rohres (1) erforderlichen Spiels ist und andererseits einer Kernstange (18) im Inneren des Rohres (1) in dem Bereich, der sich innerhalb der Rohrform (5) befindet, wobei die Kernstange (17) einen Innenkanal (18) zum Einlassen eines Druckfluids in den Ringraum (20) zwischen der Kernstange (17) und dem Rohr aufweist und der Ringraum (20) durch in zwei in Ringnuten (21, 22) zwischen der Kernstange (17) und dem Rohr (1) zu beiden Seiten der Expansionskammer (14) auf der Höhe der Formsitze (12, 13) gelagerte Dichtungen (23, 24) abgeschlossen ist, dadurch gekennzeichnet, dass die beiden zylindrischen Sitze (12, 13) der Form (5) gegenüber der Oberfläche des aufzuweitenden Rohres (1) unterschiedliche Reibungskoeffizienten haben und dadurch, dass der zylindrische Sitz (12) mit dem grösseren Reibungskoeffizienten auf der Seite des Endes (33) des Rohres (1) gelegen ist, zu dem der Abstand der Form (5) während der Expansion konstant gehalten werden soll.

2. Vorrichtung nach Anspruch 1, dadurch gekennzeichnet, dass jede Ringnut (21) mindestens einen torischen Dichtring (23) aufweist.

3. Vorrichtung nach Anspruch 1 oder 2, dadurch gekennzeichnet, dass mindestens einer der beiden Sitze (12) der Form einen Einsatz (39) aufweist, der aus einem Material gefertigt ist, das gegenüber der Rohroberfläche einen anderen Reibungskoeffizienten aufweist als das Material des anderen Sitzes (13).

4. Verfahren zur örtlichen Aufweitung eines präzise lokalisierten Bereichs im Verlauf der Wandung zylindrischer Rohre grosser Länge, wobei der Abstand zwischen dem aufgeweiteten Bereich und einem der Rohrenden präzise eingehalten werden muss, bei dem im dem aufzuweitenden Bereich um das Rohr (1) herum eine Form (5) mit einer Expansionskammer (14) zwischen zwei zylindrischen Sitzen (12, 13) angebracht, und bei dem ins Rohrinnere in den Bereich, der sich innerhalb der Form (5) befindet eine Kernstange (17) eingeführt wird, durch die ein Druckfluid in den Ringraum (20) zwischen der Kernstange (17) und dem Rohr (1) eingeführt wird, wobei dieser Raum durch Dichtungen (23, 24) abgeschlossen wird, die in zwei Ringnuten zu beiden Seiten der Expansionskammer (14) auf der Höhe der zylindrischen Sitze (12, 13) der Form (5) gelagert sind und der Fluid-Druck in diesem Raum erhöht wird, bis sich das Rohr (1) verformt und gegen die Wandungen der Expansionskammer (14) anlegt, dadurch gekennzeichnet, dass die beiden zylindrischen Sitze (12, 13) gegenüber dem Rohr unterschiedliche Reibungskoeffizienten haben und die Form (5) so zum zu exponierenden Rohr angeordnet wird, dass der Sitz (12) mit dem grösseren Reibungskoeffizienten sich auf der Seite des Rohrendes (33) befindet, zu dem der Abstand der Form (5) während der Expansion konstant gehalten werden soll.

5. Verfahren nach Anspruch 4, dadurch gekennzeichnet, dass vor der Expansion der Abstand $L_1$ zwischen der Endseite (34) der Form (5) und dem Ende (33) des Rohres (1) so justiert wird, dass in Anbetracht des Abstands $L_2$ zwischen der Endseite (34) der Form (5) und dem Anfang des Übergangsbereichs (15) zur Expansionskammer (14) die Beziehung:

$$L = L_1 + L_2$$

erhalten wird, wobei L der Abstandd zwischen dem Ende (33) des Rohres (1) und dem Anfang (3) des expandierten Bereichs ist, der während der Expansion konstant gehalten werden soll.

FIC.1

FIG. 2

FIG.3

FIG.4